# EUROPÄISCHE PATENTSCHRIFT

(11) **EP 1 093 955 B1**
(45) Veröffentlichungstag und Bekanntmachung des Hinweises auf die Patenterteilung: **20.09.2006**
(21) Anmeldenummer: 00121627.4
(22) Anmeldetag: 04.10.2000
(51) Int. Cl.: B60K 37/02

(54) **Verfahren zur automatischen Anpassung der Anzeige eines Kombiinstruments**
Method of automatically adapting the indication on a combination instrument
Procédé pour adapter automatiquement l'affichage d'un instrument combiné

(30) Priorität: 19.10.1999 DE 19950156
(43) Veröffentlichungstag der Anmeldung: 25.04.2001
(73) Patentinhaber: ROBERT BOSCH GMBH, 70442 Stuttgart (DE)
(72) Erfinder: Aumayer, Richard, 31199 Diekholzen (DE)

(56) Entgegenhaltungen:
- EP-A- 0 895 892
- EP-A- 0 926 468
- DE-A- 19 615 249
- DE-A- 19 755 470
- DE-A- 19 906 419
- US-A- 5 485 161
- PATENT ABSTRACTS OF JAPAN vol. 1996, no. 10, 31. Oktober 1996 (1996-10-31) -& JP 08 146116 A (MATSUSHITA ELECTRIC IND CO LTD), 7. Juni 1996 (1996-06-07)
- PATENT ABSTRACTS OF JAPAN vol. 1995, no. 10, 30. November 1995 (1995-11-30) -& JP 07 182598 A (MITSUBISHI ELECTRIC CORP), 21. Juli 1995 (1995-07-21)

## Beschreibung

### Stand der Technik

Die Erfindung geht aus von einem Verfahren nach der Gattung des Hauptanspruchs. Es ist schon bekannt, die aktuelle Geschwindigkeit eines Fahrzeugs anzuzeigen und dabei zum Beispiel eine vielerorts geltende Höchstgeschwindigkeit von 50 km/h in der Anzeige hervorzuheben. Diese Hervorhebung erfolgt z.B. durch einen rot gefärbten Strich oder einen rot gefärbten Balken, der auf einer Skala der Anzeige aufgebracht ist, so daß der Geschwindigkeitsskalenwert von 50 km/h für einen Benutzer des Fahrzeugs besonders markant ist. Ferner ist es möglich, auch für vergleichbare, besondere Geschwindigkeitswerte, wie zum Beispiel einer Höchstgeschwindigkeit von 30 km/h in Wohngebieten oder von 130 km/h als Richtgeschwindigkeiten auf Autobahnen in Deutschland, eine besondere Markierung auf der Skala der Anzeige bei diesen Geschwindigkeitswerten vorzusehen. Fährt nun ein Benutzer des Fahrzeugs zum Beispiel in ein anderes Land, so gelten dort im allgemeinen andere Werte für die erlaubten Höchstgeschwindigkeiten für eine jeweilige Straßenklasse. Ferner kann auch die physikalische Einheit der Geschwindigkeit, in der Höchstgeschwindigkeitsschilder und Richtlinien in diesem Land angegeben sind, eine andere sein, zum Beispiel Meilen pro Stunde. Für einen Benutzer des Fahrzeugs ist es nun problematisch, eine Zuordnung zwischen einer erlaubten Höchstgeschwindigkeit und der in seinem Fahrzeug angezeigten Geschwindigkeit zu treffen, zumal die in der Skala gekennzeichneten Höchstgeschwindigkeiten weiterhin hervorgehoben bleiben und zu einer Irritierung des Benutzers des Fahrzeugs führen können. Weiterhin ist es bekannt, Anzeigen vorzusehen, die Skalen in mehreren physikalischen Einheiten, so zum Beispiel km/h als auch mph (Meilen pro Stunde) aufweisen. Der Benutzer des Fahrzeugs muss hier selber die Zuordnung von Skalenwerten zu einer physikalischen Einheit treffen. Außerdem kann er weiterhin durch markierte Höchstgeschwindigkeiten irritiert werden, die in dem Gebiet, in dem er sich gerade befindet, nicht gelten. Dies gilt auch dann, wenn sich bei einem Wechsel des Gebietes nicht die physikalische Einheit, sondern lediglich erlaubte Höchstgeschwindigkeiten ändern.

Aus der gattungsgemäßen EP 0 895 892 A2 ist ein Anzeigeinstrument bekannt, das mehrere voneinander unabhängige Anzeigeorgane aufweist. Die Zeiger des Anzeigeinstruments sind hierbei derart ansteuerbar, dass unterschiedliche Messbereiche und Messgrößen mittels des Anzeigeinstruments dargestellt werden können. Insbesondere ist es hierbei möglich, durch die elektronisch ansteuerbare Anzeigefläche die Skaleneinteilung und die Einheiten der Skala z.B. für unterschiedliche Länder zwischen mph und km/h umzustellen.

### Vorteile der Erfindung

Das erfindungsgemäße Verfahren mit den Merkmalen des Hauptanspruchs 1 hat demgegenüber den Vorteil, dass der Fahrer immer über die aktuelle Fahrzeuggeschwindigkeit informiert wird, ohne dass er selbständig eine Zuordnung des Skalenwertes zu einer physikalischen Einheit treffen muss. Hierdurch wird es dem Fahrer insbesondere erleichtert, in den Gebieten auf Verkehrszeichen zu reagieren, die eine Geschwindigkeit von Fahrzeugen begrenzen. Denn die Geschwindigkeit seines Fahrzeuges wird direkt in der geltenden physikalischen Einheit angezeigt. Durch die in den Unteransprüchen aufgeführten Maßnahmen sind vorteilhafte Weiterbildungen des im Hauptanspruch angegebenen Verfahrens möglich.
Es ist vorteilhaft, dass der Fahrer optimal über allgemein in dem Gebiet geltende Höchstgeschwindigkeiten für bestimmte Straßenklassen informiert wird. So wird vermieden, dass ein Fahrer durch eine in der Geschwindigkeitsskala eingetragene Höchstgeschwindigkeit irritiert wird, die in dem Gebiet, in dem er sich zur Zeit befindet, nicht gilt. Dies hat außerdem bei der Herstellung von Geschwindigkeitsanzeigen den Vorteil, daß für verschiedene Länder nur eine Geschwindigkeitsanzeige gefertigt werden muß, da eine Anpassung an landesübliche Geschwindigkeitseinheiten und landesübliche Höchstgeschwindigkeiten automatisch erfolgt.

Besonders vorteilhaft ist es, daß bei einem Wechsel der Anzeige der aktuellen Fahrzeuggeschwindigkeit und/oder der zulässigen Höchstgeschwindigkeit infolge eines Gebietswechsels eine akustische und/oder optische Warnung erfolgt. Hierdurch wird der Benutzer des Fahrzeugs darauf hingewiesen, daß er nun eine andere physikalische Einheit und ggf andere Höchstgeschwindigkeiten zu beachten hat. Ferner wird somit auch vermieden, daß eine plötzliche und unerwartete Änderung der Geschwindigkeitsanzeige zur Verwirrung des Fahrers führt.

Weiterhin ist es vorteilhaft, daß die Anzeige der aktuellen Fahrzeuggeschwindigkeit und/oder der zulässigen Höchstgeschwindigkeit in einer Anzeige eines frei programmierbaren Kobiinstruments erfolgt. Denn da die Anzeige eines frei programmierbaren Kombiinstruments in der Regel in einem Bildschirm erfolgt, kann das erfindungsgemäße Verfahren durchgeführt werden, ohne daß mechanische beziehungsweise konstruktive Vorkehrungen bei der Geschwindigkeitsanzeige getroffen werden müssen.

Weiterhin ist es vorteilhaft, daß in dem Fahrzeug gespeicherte Werte für die zulässige Höchstgeschwindigkeit über eine Funkverbindung oder über einen Datenträger aktualisiert werden können. Denn da sich erlaubte Geschwindigkeiten in einem bestimmten Gebiet oder auch die Lage von Gebietsgrenzen ändern können, ist es somit möglich, den Datenbestand zu aktualisieren, um eine korrekte Anzeige von erlaubten Höchstgeschwindigkeiten zu ermöglichen.

Es ist ferner vorteilhaft, daß eine Überprüfung, ob eine Überschreitung einer Gebietsgrenze stattgefunden hat, in einem Randbereich des Gebietes häufiger erfolgt als in einem Kernbereich des Gebietes. Befindet sich das Fahrzeug nämlich innerhalb des Gebietes in einem Bereich außerhalb des Randbereiches, ist eine Überschreitung einer Gebietsgrenze in nächster Zeit sehr unwahrscheinlich. Eine häufige Abfrage, in welchem Gebiet sich das Fahrzeug befindet, erfordert daher unnötige Rechnerkapazität. In einem Randbereich eines Gebietes ist dagegen ein Gebietswechsel möglich, so daß eine häufigere Überprüfung, in welchem Gebiet sich das Fahrzeug befindet, es ermöglicht, eine mit dem Gebietswechsel verbundene Änderung der Anzeige der Fahrzeuggeschwindigkeit bzw. der zulässigen Höchstgeschwindigkeiten möglichst schnell nach einem Gebietswechsel durchzuführen.

Es ist außerdem vorteilhaft, daß die Anzeige der aktuellen Fahrzeuggeschwindigkeit und/oder der zulässigen Höchstgeschwindigkeit in Abhängigkeit von dem Fahrzeug erfolgt. Denn je nach Gewicht, Hubraum bzw. Anhängerbetrieb des Fahrzeuges gelten möglicherweise für die verschiedenen Straßenklassen andere Höchstgeschwindigkeiten, so daß durch die Anzeige von allgemein geltenden Höchstgeschwindigkeiten ein Fahrer möglicherweise dazu verleitet wird, zu schnell zu fahren.

Weiterhin ist es vorteilhaft, dem Fahrer zusätzlich anzuzeigen, welche Höchstgeschwindigkeit für die Straßenklasse besteht, die er gerade benutzt. So ist er nicht darauf angewiesen, eine Zuordnung zwischen der aktuellen Fahrzeuggeschwindigkeit und der gerade benutzten Straßenklasse selbst zu treffen.

Weiterhin ist es vorteilhaft, daß eine optische und/oder akustische Warnung des Fahrers erfolgt, sobald er die in einem Gebiet geltende, maximale Höchstgeschwindigkeit überschreitet. Hierdurch kann ein unbeabsichtigtes Überschreiten der Höchstgeschwindigkeit vermieden werden, wenn der Fahrer die Geschwindigkeitsanzeige nicht beachtet.

### Zeichnung

Ausführungsbeispiele der Erfindung sind in der Zeichnung dargestellt und in der nachfolgenden Beschreibung näher erläutert. Es zeigen Figur 1a das erfindungsgemäße Verfahren, Figur 1b eine Ortung der Fahrzeugposition innerhalb des erfindungsgemäßen Verfahrens, Figur 1c eine Anpassung der Anzeige und der zulässigen Höchstgeschwindigkeit innerhalb des erfindungsgemäßen Verfahrens, Figur 2a eine Ansicht einer Geschwindigkeitsanzeige, Figur 2b, 2c und 2d erfindungsgemäße Änderungen der Geschwindigkeitsanzeige, Figur 3 eine Vorrichtung zur Durchführung des erfindungsgemäßen Verfahrens.

### Beschreibung des Ausführungsbeispiels

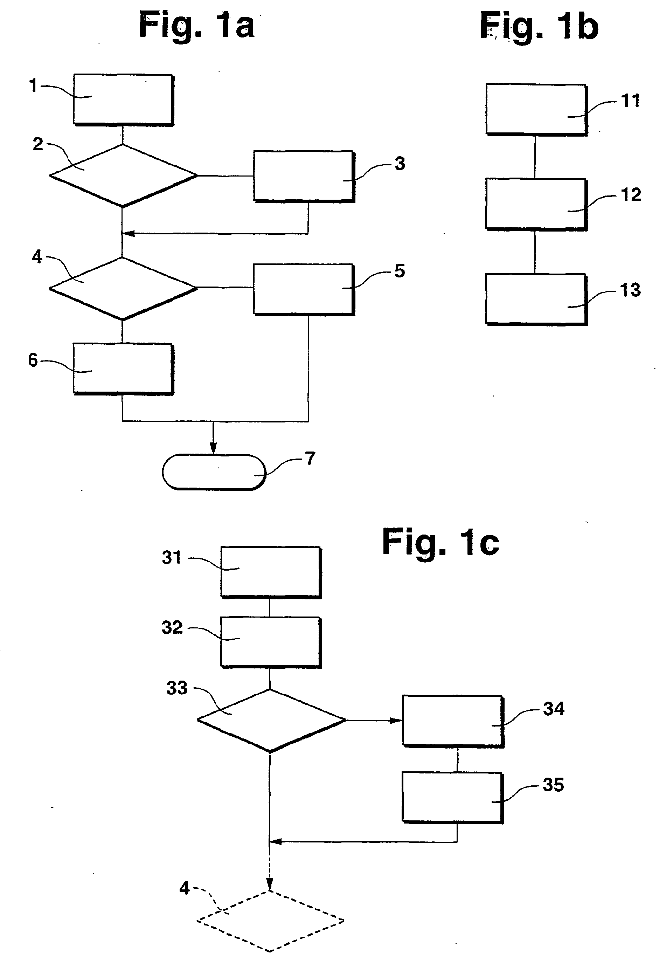

In Figur 1a ist ein Beispiel für das erfindungsgemäße Verfahren dargestellt. In einem Ortungsschritt 1 wird bestimmt, in welchem Gebiet sich das Fahrzeug befindet. Dieses Gebiet kann zum Beispiel ein Staat, ein Land oder ein Stadtgebiet sein, in dem im allgemeinen, jeweils für bestimmte Straßenklassen, bestimmte Höchstgeschwindigkeiten gelten. Ferner sind aber auch Gebiete, wie zum Beispiel sogenannte Tempo-30-Zonen oder Werksgelände möglich, für die spezielle Höchstgeschwindigkeiten festgelegt sind. Im Anschluß an den Ortungsschritt 1 wird in einem ersten Entscheidungsschritt 2 überprüft, ob seit der letzten Überprüfung die Grenze eines Gebietes überschritten wurde. Ist dies der Fall oder ist kein letztes Gebiet gespeichert, zum Beispiel bei der erstmaligen Durchführung des erfindungsgemäßen Verfahrens, so wird zu einem Anpassungsschritt 3 verzweigt. In dem Anpassungsschritt 3 wird eine Anpassung der Anzeige der aktuellen Fahrzeuggeschwindigkeit bzw. der Anzeige der zulässigen Höchstgeschwindigkeiten durchgeführt. Nach dem Anpassungsschritt 3 wird zu einem zweiten Entscheidungsschritt 4 verzweigt. Zu dem zweiten Entscheidungsschritt 4 wird ebenfalls von dem ersten Entscheidungsschritt 2 verzweigt, wenn in dem ersten Entscheidungsschritt 2 festgestellt wurde, daß keine Überschreitung einer Gebietsgrenze stattgefunden hat. In dem zweiten Entscheidungsschritt 4 wird anhand der in dem Ortungsschritt 1 ermittelten Position des Fahrzeugs überprüft, ob sich das Fahrzeug in einem Randbereich eines Gebietes befindet. Ist dies der Fall, so wird zu dem Verfahrensschritt 5 verzweigt. In dem Verfahrensschritt 5 wird ein erstes Zeitintervall festgelegt, nach dem das erfindungsgemäße Verfahren das nächste Mal erneut begonnen wird. Das erste Zeitintervall ist von der Größe des Randbereiches und einer zu erwartenden, durchschnittlichen Geschwindigkeit des Fahrzeugs abhängig. Da der Ortungsschritt 1 möglicherweise durch eine Vorrichtung ausgeführt wird, durch die auch eine Fahrzeugnavigation erfolgt, kann der Ortungsschritt 1 und in der Folge möglicherweise auch das gesamte erfindungsgemäße Verfahren von dieser Vorrichtung auch häufiger ausgeführt werden, falls die Fahrzeugnavigation eine häufigere Ortung erfordert. Wird in dem zweiten Entscheidungsschritt festgestellt, daß sich das Fahrzeug nicht in einem Randgebiet des Gebietes befindet, so wird ein zweites Zeitintervall festgelegt, das größer ist als das erste Zeitintervall. Für ein Fahrzeug, das sich z.B. außerhalb eines Streifens von 15 km von der Grenze entfernt bewegt, ist zum Zweck der Anpassung der Anzeige eine Durchführung des erfindungsgemäßen Verfahrens nach einem zweiten Zeitintervall von etwa fünf Minuten ausreichend. Innerhalb eines Randbereiches von 15 Kilometern ist z.B. eine Überprüfung nach einem ersten Zeitintervall von etwa einer Minute ausreichend. Nach dem ersten Verfahrensschritt 5 und dem zweiten Verfahrensschritt 6 wird das Verfahren mit einem Abschlußschritt 7 beendet und nach dem zuvor festgelegten ersten bzw. zweiten Zeitintervall wieder gestartet.

In der Figur 1b ist der Ortungsschritt 1 im Detail dargestellt. In einem ersten Positionsfeststellungsschritt 11 wird zum Beispiel mit Hilfe einer GPS-Ortung und/oder einer Koppelortung eine geographische Position des Fahrzeugs bestimmt. In einem zweiten Positionsfeststellungsschritt 12 wird dieser geographischen Position eine Position in einer digitalen Karte, die in dem Fahrzeug gespeichert vorliegt, zugewiesen. In einem Zuweisungsschritt 13 wird anschließend aus dieser Position in der digitalen Karte ermittelt, in welchem Gebiet sich das Fahrzeug befindet.

In Figur 1c ist die Anzeigenanpassung 3 im Detail dargestellt. In einem ersten Feststellungsschritt 31 werden die Daten des Fahrzeugs ermittelt, wie Gewicht, Hubraum bzw. ob ein Anhänger angehängt ist. In einem zweiten Feststellungsschritt 32 werden in Abhängigkeit von den in dem ersten Feststellungsschritt 31 ermittelten Fahrzeugdaten die in dem Gebiet, in dem sich das Fahrzeug befindet, für die Geschwindigkeit geltende physikalische Einheit und die für verschiedene Straßenklassen geltenden Höchstgeschwindigkeiten, die im Fahrzeug gespeichert sind, unter Berücksichtigung der Fahrzeugdaten ermittelt. In einem anschließenden dritten Entscheidungsschritt 33 wird überprüft, ob nun eine Anpassung der Anzeige der aktuellen Fahrzeuggeschwindigkeit oder der zulässigen Höchstgeschwindigkeit erforderlich ist. Ist eine Anpassung erforderlich, wird in einem Anpassungsschritt 34 die Darstellung der Geschwindigkeit in der Anzeige auf die entsprechende physikalische Einheit falls erforderlich geändert. Außerdem wird in der Anzeige mindestens eine Höchstgeschwindigkeit hervorgehoben, die wiederum für mindestens eine Straßenklasse gilt, so z.B. eine Höchstgeschwindigkeit von 50 km/h innerorts in Deutschland. Anschließend erfolgt ein Warnschritt 35. Durch akustische und/oder optische Warnung wird der Fahrer darauf hingewiesen, daß bezüglich der Anzeige der aktuellen Fahrzeuggeschwindigkeit und/oder der zulässigen Höchstgeschwindigkeit für mindestens eine Straßenklasse eine Änderung erfolgt ist. Eine Verwirrung des Fahrers durch eine plötzlich ohne zusätzlichen Hinweis geänderte Anzeige kann hierdurch vermieden werden. Danach wird zu dem zweiten Entscheidungsschritt 4, der in Figur 1a dargestellt ist, weiterverzweigt. Da der zweite Entscheidungsschritt bereits in Figur 1a dargestellt ist, ist er in der Figur 1c lediglich gestrichelt eingezeichnet. Der zweite Entscheidungsschritt 4 wird auch von dem dritten Entscheidungsschritt 33 erreicht, wenn keine Änderung der Anzeige erforderlich ist.

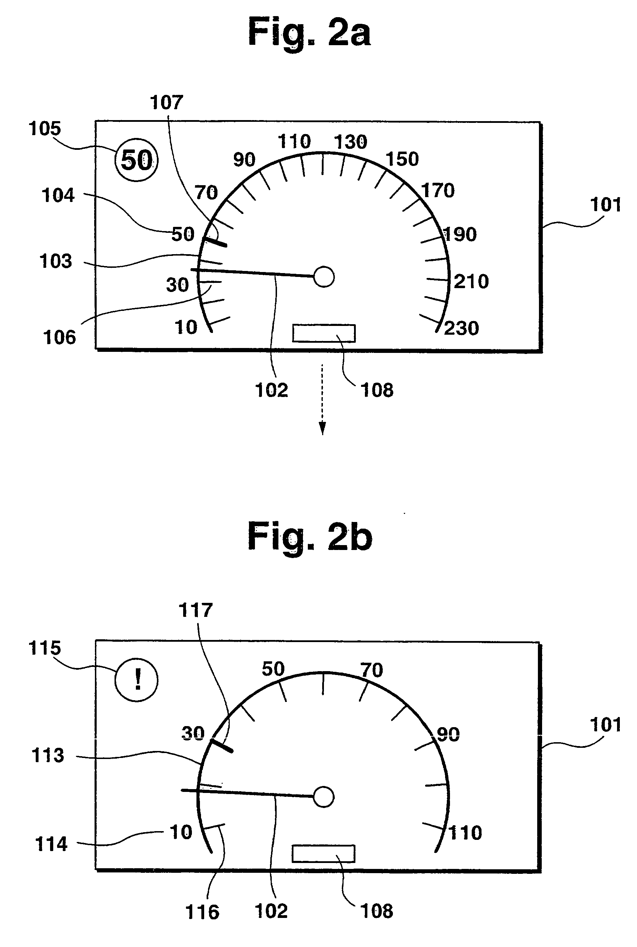

In der Figur 2a ist eine Geschwindigkeitsanzeige in einem Kraftfahrzeug dargestellt. In einer Anzeige 101 ist eine erste Skala 103 mit Skalenwerten 104 und ersten Skalenstrichen 106 dargestellt. Zur Vereinfachung der Darstellung ist lediglich ein Skalenwert 104 und ein erster Skalenstrich 106 mit einem Bezugszeichen versehen. Ein zweiter Skalenstrich 107 ist besonders hervorgehoben, indem er länger und breiter ausgeführt ist, als die ersten Skalenstriche 106. Ferner ist als Ergänzung hierzu oder als alleiniges Hervorhebungsmittel eine Anzeige in einer anderen Farbe, so z.B. rot, gelb oder orange, gegenüber den übrigen Skalenstrichen 106 möglich, die z.B. in weiß ausgeführt sind. Die Anzeige eines Wertes auf der ersten Skala 103 erfolgt mittels eines Zeigers 102, der sich über die erste Skala 103 bewegen kann. Eine Einheitenanzeige 108 ermöglicht die Zuordnung der Skalenwerte 104 zu einer physikalischen Einheit, indem die physikalische Einheit in der Einheitenanzeige 108 angezeigt wird, so zum Beispiel "km/h". Ferner ist in der Anzeige 101 ein erstes Höchstgeschwindigkeitssymbol 105 dargestellt. Sowohl durch den zweiten Skalenstrich 107, als auch durch das erste Höchstgeschwindigkeitssymbol 105 wird ein Fahrer des Fahrzeugs in Verbindung mit der Einheitenanzeige 108, in der z.B. "km/h" angezeigt ist, auf eine Höchstgeschwindigkeit von 50 km/h hingewiesen. Die Anzeige des zweiten Skalenstriches 107 und des ersten Höchstgeschwindigkeitssymbols 105 kann permanent in einem Gebiet erfolgen, in dem für eine Straßenklasse, z.B. alle Straßen innerorts, eine Höchstgeschwindigkeit von 50 km/h gilt. Hierbei ist es ergänzend möglich, durch die zusätzliche Einblendung eines in der Figur nicht eingezeichneten Symbols für "Stadt" oder "Ort" die angezeigte Höchstgeschwindigkeit so zu kennzeichnen, daß es für den Fahrer ersichtlich ist, daß sie sich auf eine Straßenklasse "innerorts" bezieht. Weiterhin ist es möglich, daß nur dann eine derartige Anzeige erfolgt, wenn sich das Fahrzeug in einer geschlossenen Ortschaft befindet und die Höchstgeschwindigkeit von 50 km/h dort gilt. Eine derartige Anzeige ist gleichermaßen für andere Straßenklassen möglich, so z.B. für Autobahnen.

In den Figuren 2b bis 2d sind mögliche Ansichten der Anzeige 101 dargestellt, wobei die Anzeige jeweils gegenüber der Figur 2a nach dem erfindungsgemäßen Verfahren geändert wurde. Hier und im folgenden sollen gleiche Bezugszeichen auch gleiche Elemente in den Figuren bezeichnen.

In der Figur 2b ist die Anzeige 101 dargestellt, nachdem das Fahrzeug in ein Gebiet gewechselt hat, in dem als physikalische Einheit für die Geschwindigkeit von Fahrzeugen Meilen pro Stunde vorgesehen ist. Ferner ist in diesem Gebiet nunmehr eine Höchstgeschwindigkeit von 30 mph innerorts vorgesehen. In der Anzeige 101 ist nun eine zweite Skala 113 mit Skalenwerten 114 sowie ersten Skalenstrichen 116 und einem zweiten Skalenstrich 117 dargestellt. Der zweite Skalenstrich 117 befindet sich nun an der entsprechenden Stelle der zweiten Skala 113. In der Einheitenanzeige 108 wird nun die Einheit "mph" dargestellt. Ferner ist in der Anzeige 101 ein Warnsymbol 115 erkennbar, das den Fahrer auf den Wechsel der Darstellung in der Anzeige 101 aufmerksam machen soll. Nach einer vorgebbaren Zeit, so z.B. nach etwa fünf Minuten, ist davon auszugehen, daß der Fahrer die Änderung wahrgenommen hat. Deshalb kann das Warnsymbol nach der vorgebbaren Zeit erlöschen.

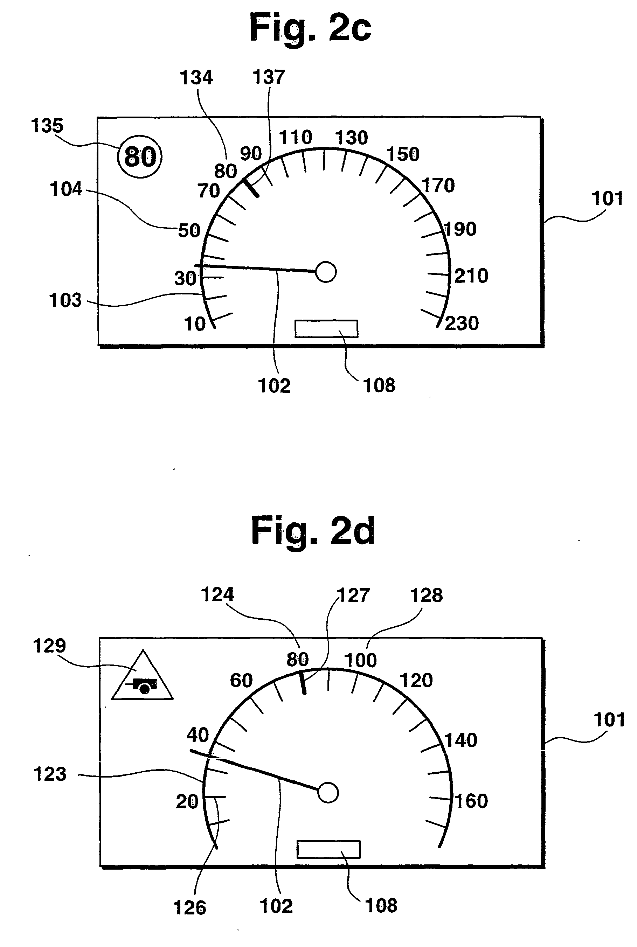

In der Figur 2c ist die Anzeige 101 dargestellt, nachdem gegenüber der Figur 2a ein Wechsel in ein Gebiet stattgefunden hat, in dem eine Höchstgeschwindigkeit von 80 km/h gilt. Die Einheitenanzeige 108 bleibt in diesem Fall gegenüber der Figur 2a unverändert. Es erscheint jedoch ein zweites Höchstgeschwindigkeitssymbol 135 sowie ein zweiter Skalenwert 134. Außerdem erscheint ein zweiter Skalenstrich 137 an der entsprechenden Stelle in der ersten Skala 103. Zusätzlich zu dem Wechsel der Anzeige kann ein Warnton ausgegeben werden, der den Fahrer darauf hinweist, daß sich die zulässige Höchstgeschwindigkeit infolge eines Gebietswechsels geändert hat.

In der Figur 2d ist in der Anzeige 101 eine dritte Skala 123 mit ersten Skalenstrichen 126 und ersten Skalenwerten 128 dargestellt. Ferner ist ein zweiter Skalenwert 124 und ein zweiter Skalenstrich 127, zum Beispiel durch Vergrößerung Verbreiterung und/oder durch die Wahl einer anderen Farbe, so z.B. rot, gelb oder orange, hervorgehoben. Zudem ist in der Anzeige 101 ein Anhängersymbol 129 sichtbar. Bei der Überprüfung der Fahrzeugdaten ist ein Anhänger detektiert worden, so daß die Anzeige des Anhängersymbols 129 erfolgt. Die dritte Skala 123 wurde an eine nun geltende Höchstgeschwindigkeit von 80 km/h insbesondere auch hinsichtlich des Skalenendwertes der dritten Skala 123 in diesem Beispiel angepaßt. Eine Hervorhebung der Höchstgeschwindigkeit erfolgt durch den zweiten Skalenstrich 127. Die Aufweitung der Skala ermöglicht dem Benutzer eine bessere Ablesbarkeit der aktuellen Fahrzeuggeschwindigkeit und ist insbesondere möglich, da das Fahrzeug mit einem Anhänger die zulässige Höchstgeschwindigkeit aller Wahrscheinlichkeit nach nicht um mehr als Doppelte übertreffen wird. Ein entsprechender Wechsel auf eine Anzeige, wie sie in der Figur 2d ausgeführt ist, kann bei einem Gebietswechsel dann erfolgen, wenn ein Fahrzeug von einem Gebiet, in dem für Fahrzeuge mit Anhänger keine spezielle Höchstgeschwindigkeit vorgesehen ist, z.B. innerhalb eines Werksgeländes, in dem für alle Fahrzeuge die gleiche Höchstgeschwindigkeit gilt, z.B. 10 km/h oder 25 km/h, in ein Gebiet wechselt, in dem eine solche zulässige Höchstgeschwindigkeit existiert.

Wird die in den Figuren 2a-2d hervorgehobene Höchstgeschwindigkeit überschritten, so kann unter Berücksichtigung eines Toleranzbereiches eine optische und/oder akustische Warnung des Fahrers erfolge.

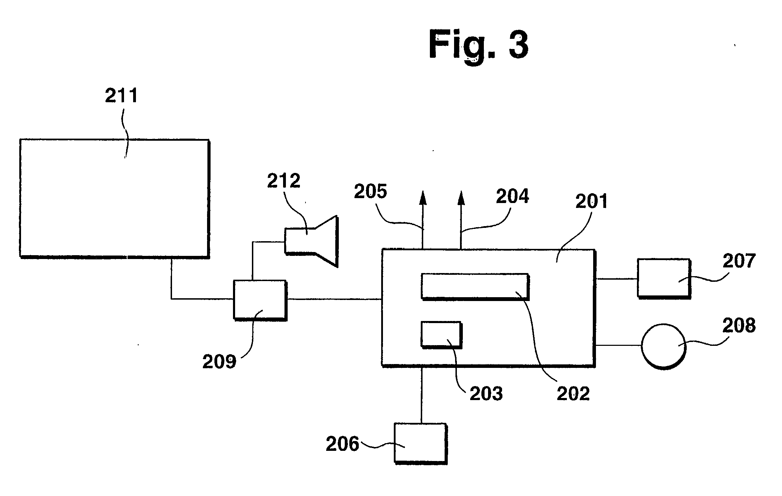

In der Figur 3 ist eine Vorrichtung zur Durchführung des erfindungsgemäßen Verfahrens dargestellt. Eine Ortungsvorrichtung 201 verfügt über eine Positionsermittlungseinheit 202, die Daten auswertet, die sie über eine erste Funkantenne 204 und/oder über Fahrzeugsensoren 206 erhält. Über die erste Funkantenne 204 steht die Positionsermittlungseinheit 202 dabei vorzugsweise zumindest zeitweise in Verbindung mit GPS-Satelliten. Ferner verfügt die Ortungsvorrichtung 201 über eine Recheneinheit 203, einen Speicher 207, ein Datenträgerlaufwerk 208 und eine zweite Funkantenne 205. Die Ortungsvorrichtung 201 steht in Verbindung zu einer Anzeigeeinheit 211 über eine Recheneinheit der Anzeige 209. Die Recheneinheit der Anzeige 209 verfügt ferner über eine Verbindung zu einem Lautsprecher 212.

Die Ortungsvorrichtung 201 kann z.B. Teil eines Navigationssystems sein, das in einem Fahrzeug bereits vorhanden ist und für das erfindungsgemäße Verfahren nicht zusätzlich installiert zu werden braucht. Aus den Daten der GPS-Satelliten, die die Ortungsvorrichtung 201 über die erste Funkantenne 204 ermittelt, berechnet die Positionsermittlungseinheit 202 eine geographische Position des Fahrzeugs. Dieser geographischen Position des Fahrzeugs wird mittels einer digitalen Karte, die in dem Speicher 207 abgelegt ist, die Position in einem Gebiet zugewiesen. Der Speicher 207 kann dabei ebenfalls ein Datenträgerlaufwerk sein, zum Beispiel ein CD-Laufwerk oder eine Festplatte. Die Recheneinheit 203 ermittelt nun über die Fahrzeugsensoren 206 die Daten, die für die Geschwindigkeitsanzeige relevant sind. Neben der aktuellen Fahrzeuggeschwindigkeit kann zum Beispiel ermittelt werden, ob ein Anhänger angehängt ist, die Nebelschlußleuchte aktiviert ist oder ob Schneeketten angelegt sind, da auch in diesem Fall besondere, zulässige Höchstgeschwindigkeiten existieren. Ferner ermittelt die Recheneinheit aus der Position des Fahrzeugs in der digitalen Karte, welche physikalische Einheit in dem Gebiet, in dem sich das Fahrzeug befindet, im wesentlichen für die Geschwindigkeit von Fahrzeugen vorgesehen ist. Ferner ermittelt die Recheneinheit 203 welche Höchstgeschwindigkeiten für die einzelnen Straßenklassen bestehen, so z.B. für Autobahnen, Schnellstraßen, Landstraßen, Wohnstraßen oder allgemeine Straßen innerorts. Hierbei werden die von den Fahrzeugsensoren 206 ermittelten Fahrzeugdaten berücksichtigt. Diese Daten werden an die Recheneinheit der Anzeige 209 weitergegeben, die insbesondere der Berechnung der optischen Darstellung in der Anzeige dient. Bei einer Änderung der Anzeige erfolgt eine akustische Warnung über den Lautsprecher 212. Die Anzeigeeinheit 211 stellt nun möglicherweise geänderte Skalen, geänderte Skalenwerte, geänderte physikalische Anzeigen sowie zusätzliche Warnsymbole beziehungsweise Höchstgeschwindigkeitssymbole dar. Dabei besteht die Anzeigeeinheit 211 aus einer Anzeigenansteuerung und einem Anzeigemedium, zum Beispiel einem Bildschirm in Form einer Flüssigkristallanzeige, einem Plasmabildschirm oder einer Kathodenstrahlröhre. Die Ausführung als Bildschirm ermöglicht es, die Änderungen der Anzeige nach dem erfindungsgemäßen Verfahren sehr einfach durchzuführen, indem lediglich ein anderes Bild in dem Bildschirm die Anzeigeneinheit 211 dargestellt wird.

Ferner ist es auch möglich, bei einem herkömmlichen Kombiinstrument mit mechanischen Anzeigeelementen das erfindungsgemäße Verfahren anzuwenden. Die Ansteuerung eines Zeigers 102 muß dann an die entsprechende, in der Einheitenanzeige 108 dargestellte physikalischen Einheit angepaßt werden. Die physikalische Einheit wird dabei in einer kleinen Anzeige ausgegeben oder durch beleuchtete Symbolfelder kenntlich gemacht. Eine Höchstgeschwindigkeit kann zum Beispiel durch eine Hinterleuchtung in einer anderen Farbe an dem zu der entsprechenden Höchstgeschwindigkeit gehörenden Skalenstrich erfolgen. Warnsymbole beziehungsweise Höchstgeschwindigkeitssymbole können durch eine Vielzahl von einzeln ansteuerbaren Symbolfeldern realisiert werden.

Über die zweite Funkverbindung 205 besteht die Möglichkeit, die bezüglich der Höchstgeschwindigkeiten gespeicherten Daten in dem Speicher 207 zu aktualisieren, damit einem Fahrer keine falschen Informationen angezeigt werden. Eine Aktualisierung ist auch über einen Datenträger möglich, der in das Datenträgerlaufwerk 208 eingelegt wird und auf dem aktuelle Informationen zu den in den verschiedenen Gebieten geltenden Höchstgeschwindigkeiten einschließlich der physikalischen Einheiten gespeichert sind. Für den Fall, daß keine Ortung möglich ist, z.B. wenn sich das Fahrzeug in einem Parkhaus befindet, sind in der Recheneinheit der Anzeige 209 Daten der zuletzt erfolgten Anzeigendarstellung abgelegt.

## Patentansprüche

1. Verfahren zur Anzeige von Geschwindigkeitsgrößen in einem Fahrzeug, insbesondere in einem Kraftfahrzeug, wobei eine aktuelle Position des Fahrzeugs über eine in dem Fahrzeug angeordnete Ortungsvorrichtung ermittelt wird, wobei der Position des Fahrzeugs eine Position in einer digitalen Karte zugewiesen wird, wobei der Position des Fahrzeugs aus der Position in der digitalen Karte ein Gebiet, insbesondere ein Staat, ein Land oder ein Stadtgebiet, zugeordnet wird, wobei die in dem Gebiet, in dem sich das Fahrzeug befindet, für die Geschwindigkeit geltende physikalische Einheit ermittelt wird, wobei überprüft wird, ob eine Anpassung der Anzeige der aktuellen Fahrzeuggeschwindigkeit erforderlich ist und wobei für den Fall, dass die Anpassung erforderlich ist, die Darstellung der Geschwindigkeit in der Anzeige auf eine Darstellung in der entsprechenden physikalischen Einheit geändert wird und wobei eine Anzeige einer aktuellen Fahrzeuggeschwindigkeit in dieser physikalischen Einheit erfolgt.

2. Verfahren nach Anspruch 1, **dadurch gekennzeichnet, dass** in der Anzeige mindestens eine Höchstgeschwindigkeit hervorgehoben wird, die für mindestens eine Straßenklasse in dem Gebiet gilt.

3. Verfahren nach Anspruch 2, **dadurch gekennzeichnet, dass** für mindestens eine Straßenklasse eine in dem Gebiet geltende zulässige Höchstgeschwindigkeit in einer Skala (103, 113, 123) für die aktuelle Fahrzeuggeschwindigkeit hervorgehoben wird.

4. Verfahren nach einem der Ansprüche 2-3, **dadurch gekennzeichnet, dass** in dem Fahrzeug gespeicherte Werte für die zulässige Höchstgeschwindigkeit über eine Funkverbindung oder über einen Datenträger aktualisiert werden.

5. Verfahren nach einem der vorhergehenden Ansprüche, **dadurch gekennzeichnet, dass** bei einem Wechsel der Anzeige der aktuellen Fahrzeuggeschwindigkeit und/oder der zulässigen Höchstgeschwindigkeit infolge eines Wechsels des Gebietes eine akustische und/oder optische Warnung erfolgt.

6. Verfahren nach einem der vorhergehenden Ansprüche, **dadurch gekennzeichnet, dass** die Anzeige der aktuellen Fahrzeuggeschwindigkeit und/oder der zulässigen Höchstgeschwindigkeit in einer Anzeige (211) eines frei programmierbaren Kombiinstruments erfolgt.

7. Verfahren nach einem der vorhergehenden Ansprüche, **dadurch gekennzeichnet, dass** jedes Gebiet einen Randbereich aufweist, dass eine Überprüfung, in welchem Gebiet sich das Fahrzeug befindet, in dem Randbereich mit einer ersten Häufigkeit und in dem Gebiet ohne den Randbereich mit einer zweiten Häufigkeit durchgeführt wird, und dass die erste Häufigkeit größer als die zweite Häufigkeit ist.

8. Verfahren nach einem der vorhergehenden Ansprüche, **dadurch gekennzeichnet, dass** die Anzeige der aktuellen Fahrzeuggeschwindigkeit und/oder der zulässigen Höchstgeschwindigkeit in Abhängigkeit von dem Fahrzeug erfolgt, insbesondere von dessen Gewicht, dessen Hubraum und/oder dessen Höchstgeschwindigkeit.

9. Verfahren nach einem der vorhergehenden Ansprüche, **dadurch gekennzeichnet, dass** die Anzeige der aktuellen Fahrzeuggeschwindigkeit und/oder der zulässigen Höchstgeschwindigkeit von einem Anhängerbetrieb des Fahrzeugs abhängig ist.

10. Verfahren nach einem der vorhergehenden Ansprüche, **dadurch gekennzeichnet, dass** die Straßenklasse über die ermittelte Position in der digitalen Karte festgestellt wird und eine Anzeige der aktuellen Fahrzeuggeschwindigkeit und/oder der zulässigen Höchstgeschwindigkeit in Abhängigkeit von der Straßenklasse erfolgt.

11. Verfahren nach einem der vorhergehenden Ansprüche, **dadurch gekennzeichnet, dass** eine Warnung des Fahrers erfolgt, wenn die aktuelle Fahrzeuggeschwindigkeit die in dem Gebiet geltende, maximale Höchstgeschwindigkeit übersteigt.

## Claims

1. Method for displaying speed variables in a vehicle, in particular in a motor vehicle, a current position of the vehicle being determined by means of a locating device which is arranged in the vehicle, a position in a digital map being assigned to the position of the vehicle, an area, in particular a state, a country or an urban area, being assigned to the position of the vehicle from the position in the digital map, the physical unit which applies to the speed in the area in which the vehicle is located being determined, and checking being carried out to determine whether it is necessary to adapt the display of the current speed of the vehicle, and wherein if adaptation is necessary the representation of the speed on the display is changed to a representation in the corresponding physical unit and a current speed of the vehicle is displayed in this physical unit.

2. Method according to Claim 1, **characterized in that** at least one maximum speed which applies to at least one road class in the area is highlighted on the display.

3. Method according to Claim 2, **characterized in that** a permissible maximum speed which applies to at least one road class in the area is highlighted on a scale (103, 113, 123) for the current speed of the vehicle.

4. Method according to one of Claims 2 - 3, **characterized in that** values for the permissible maximum speed which are stored in the vehicle are dated via a radio link or via a data carrier.

5. Method according to one of the preceding claims, **characterized in that** when the display of the current speed of the vehicle changes and/or the permissible maximum speed changes because the area changes an audible and/or visual warning is issued.

6. Method according to one of the preceding claims, **characterized in that** the current speed of the vehicle and/or the permissible maximum speed are displayed on a display (211) of a freely programmable combination instrument.

7. Method according to one of the preceding claims, **characterized in that** each area has an edge region, **in that** checking to determine which area the vehicle is in is carried out with a first frequency in the edge region and with a second frequency in the area without the edge region, and **in that** the first frequency is higher than the second frequency.

8. Method according to one of the preceding claims, **characterized in that** the current speed of the vehicle and/or the permissible maximum speed are displayed as a function of the vehicle, in particular its weight, the cubic capacity of its engine and/or its maximum speed.

9. Method according to one of the preceding claims, **characterized in that** the display of the current speed of the vehicle and/or the permissible maximum speed is dependent on a trailer mode of the vehicle.

10. Method according to one of the preceding claims, **characterized in that** the road class is identified by means of the position which is determined on the digital map, and the current speed of the vehicle and/or the permissible maximum speed are displayed as a function of the road class.

11. Method according to one of the preceding claims, **characterized in that** the driver is warned if the current speed of the vehicle exceeds the maximum speed which applies in the area.

## Revendications

1. Procédé d'affichage de grandeurs de vitesse dans un véhicule, en particulier un véhicule automobile, selon lequel
- on détermine une position actuelle du véhicule par un dispositif de localisation prévu dans le véhicule,
- on associe à la position du véhicule, une position dans une carte numérique à partir de laquelle on associe une région, en particulier un état, un pays ou une agglomération urbaine, est associée à la position du véhicule,
- on détermine l'unité physique pour la vitesse valable dans la région dans laquelle se trouve le véhicule,
- on vérifie si une adaptation de l'affichage de la vitesse actuelle du véhicule est nécessaire, et le cas échéant, on modifie la représentation de la vitesse sur l'affichage en une représentation dans l'unité physique correspondante, et
- on réalise un affichage d'une vitesse actuelle du véhicule dans cette unité physique.

2. Procédé selon la revendication 1,
**caractérisé en ce qu'**
on émet en évidence dans l'affichage au moins une vitesse maximale valable pour au moins une catégorie de route dans la région.

3. Procédé selon la revendication 2,
**caractérisé en ce que**
pour au moins une catégorie de route, on met en évidence sur un cadran (103, 113, 123) une vitesse maximale admissible valable dans la région pour la vitesse actuelle du véhicule.

4. Procédé selon l'une quelconque des revendications 2 ou 3,
**caractérisé en ce que**
par une liaison radio ou un support de données, on met à jour des valeurs pour la vitesse maximale admissible enregistrées dans le véhicule.

5. Procédé selon l'une quelconque des revendications précédentes,
**caractérisé en ce qu'**
on émet un avertissement sonore et/ou optique lors d'un changement de l'affichage de la vitesse actuelle du véhicule et/ou de la vitesse maximale admissible suite à un changement de région.

6. Procédé selon l'une quelconque des revendications précédentes,
**caractérisé en ce que**
l'affichage de la vitesse actuelle du véhicule et/ou de la vitesse maximale admissible s'effectue sur un écran (211) d'un instrument combiné programmable librement.

7. Procédé selon l'une quelconque des revendications précédentes,
**caractérisé en ce que**
chaque région présente une zone périphérique, et on fait une vérification dans la région dans laquelle se trouve le véhicule avec une première fréquence dans la zone périphérique et avec une deuxième fréquence dans la région hors de la zone périphérique, la première fréquence étant supérieure à la deuxième fréquence.

8. Procédé selon l'une quelconque des revendications précédentes,
**caractérisé en ce qu'**
on effectue l'affichage de la vitesse actuelle du véhicule et/ou de la vitesse maximale admissible en fonction du véhicule, en particulier en fonction du poids, de la cylindrée et/ ou de la vitesse maximale de celui-ci.

9. Procédé selon l'une quelconque des revendications précédentes,
**caractérisé en ce que**
l'affichage de la vitesse actuelle du véhicule et/ou de la vitesse maximale admissible est fonction de l'éventuel attelage d'une remorque au véhicule.

10. Procédé selon l'une quelconque des revendications précédentes,
**caractérisé en ce qu'**
on détermine la catégorie de route à l'aide de la position déterminée dans la carte numérique, et on effectue un affichage de la vitesse actuelle du véhicule et/ou de la vitesse maximale admissible en fonction de la catégorie de route.

11. Procédé selon l'une quelconque des revendications précédentes,
**caractérisé en ce qu'**
on émet un avertissement du conducteur si la vitesse actuelle du véhicule dépasse la vitesse maximale valable dans la région.
